# EUROPEAN PATENT SPECIFICATION

(11) **EP 3 737 089 B1**
(45) Date of publication and mention of the grant of the patent: **06.04.2022**
(21) Application number: 20173004.1
(22) Date of filing: 05.05.2020
(51) Int. Cl.: H04N 7/18, H04M 1/02

(54) **MODULAR OUTDOOR DOOR UNIT**
MODULARE AUSSENTÜREINHEIT
UNITÉ DE PORTE EXTÉRIEURE MODULAIRE

(30) Priority: 06.05.2019 BE 201905297
(43) Date of publication of application: 11.11.2020
(73) Proprietor: Niko NV, 9100 Sint-Niklaas (BE)
(72) Inventor: DESMET, Arne, 8500 Kortrijk (BE)
(74) Representative: DenK iP bv

(56) References cited:
- EP-A1- 0 060 395
- EP-A1- 1 135 013
- EP-A2- 0 980 200
- WO-A1-2008/081321
- DE-A1- 4 019 837

## Description

### Technical field of the invention

The present invention relates to an outdoor door unit. More particularly, the present invention relates to a modular outdoor door unit with at least one functional module that is easily interchangeable or removable.

### Background of the invention

Outdoor door units are devices that are mounted, for example, to a façade of a residence or an apartment building. They are connected to an indoor station that communicates with the outdoor door unit. When a visitor or user pushes a bell button on the door unit, the indoor station which may, for example, be a tablet, smartphone, wall-mounted touch screen or the like, receives a call that can be answered by the indoor user. The indoor user can communicate with the outdoor user, with or without a video feed of the outdoor user.

For existing outdoor door units it may be difficult to replace name tags when e.g. other persons are coming to live in the residence where the outdoor door unit is used. In some cases, the outdoor door unit even has to be replaced because of that.

EP 1 135 013 describes a door station comprising three functional modules and having an L-shape. The three functional modules are surrounded by a bordering frame. The functional modules and the frame are formed as a whole or a unit. This unit can be fixed to the wall by fastening screws which are screwed into the module base on each of adjacent edges of the functional modules. Therefore, each of the functional modules has fastening lugs located at the corners of the unit of the functional modules for direct fastening to a wall. Attachment clips are provided in opposite outer edges of the unit of functional modules, on which the frame is locked, and are visible. On the outer edges of the module bases, springs and slots are provided in pairs. At the corner regions of the module base the mounting tabs are visible. The door station further comprises a printed circuit board comprising connecting terminals which may be in the form of a board connector to receive the module bases.

As the door station is formed as a whole and is, as a whole, fixed to the wall, it is not so easy to remove or replace one or more of the functional modules, as for that reason, the whole door station has to be removed from the wall, and has to be demounted before a functional module can be removed.

WO 2008/081321 A1, fig. 13 discloses a modular door unit comprising a frame for receiving functional modules. A module comprises two hooks at a side. Said hooks can be inserted into corresponding seats at a side of the frame.

### Summary of the invention

It is an object of embodiments of the present invention to provide a modular outdoor door unit for which it is easy to remove and interchange functional modules.

The above objective is accomplished by a modular door unit according to the appended claims.

The modular outdoor door unit comprises at least one functional module and a frame for fixing the modular outdoor door unit to a mounting box in a wall, the frame being adapted for receiving the at least one functional module and comprising a hole at a lower side for receiving fixing means for fixing the functional module to the frame. The functional module comprises two hooks at an upper side of the functional module for inserting into corresponding slots at an upper side of the frame, and an opening at a lower side of the functional module for receiving the fixing means for fixing the functional module to the frame.

An advantage of a modular outdoor door unit according to embodiments of the invention is that the means by which the frame is fixed to a mounting box in a wall are not visible from outside the door unit, when a person is looking at it. This gives a more aesthetic look to the outdoor door unit.

Further, because the frame is fixed to the mounting box in the wall and the at least one functional module is fixed to the frame, the functional module can easily be removed or interchanged with another functional module as a user should want that, without the whole outdoor unit having to be removed from the wall. A user can do this himself and does not need an installer to help him or her with that.

According to embodiments of the invention, the modular outdoor door unit may furthermore comprise at least one further functional module. According to such embodiments, each of the functional modules may further comprise two first half slots at a lower side of the functional module to form a full slot with two corresponding second half slots on the frame, for receiving two hooks of a further functional module to be provided in the frame.

According to embodiments of the invention, the modular outdoor door unit may comprise a frame for fixing the modular outdoor door unit to a mounting box in a wall, the frame being adapted for receiving at least one functional module, and at least two functional modules. Each of the functional modules may comprise two hooks at an upper side of the functional module for, if the functional module is a first functional module to be provided in the frame, inserting into corresponding slots at an upper side of the frame, and two first half slots at a lower side of the functional module to form a full slot with two corresponding second half slots on the frame, for receiving two hooks of a second functional module to be provided in the frame. The modular outdoor door unit may further comprise an opening at a lower side of the functional module for receiving fixing means for, if the functional module is a last functional module to be provided in the frame, fixing the functional module to the frame. According to embodiments of the invention, the modular outdoor door unit may comprise two functional modules, one located above the other. According to further embodiments of the invention, the modular outdoor door unit may comprise three functional modules, one located above the other. According to still further embodiments of the invention, the modular outdoor door unit may comprise four functional modules in two vertical rows of two functional modules, or may comprise six functional modules in two vertical rows of three functional modules. According to still further embodiments, the modular outdoor door unit may comprise eight functional modules in two rows of four functional modules, or may comprise nine functional modules in three vertical rows of three functional modules or may comprise any other suitable number of functional modules, depending on the requirements of the modular outdoor door unit.

According to embodiments of the invention, the fixing means may be formed by a screw that is inserted through a hole in the frame into the opening in the lower side of the functional module. According to other embodiments, the fixing means may be formed by a screw provided in the opening in the lower side of the functional module, which can be screwed out of the opening for fixing the functional module to the frame.

The frame may be fixed to the mounting box by means of screws. The frame may be made out of aluminium, steel, brass or any other suitable metal or alloy.

The functional module may be a camera module, a name plate module, e.g. a module which shows the name of a resident, the name of the resident can be engraved in the module and can be illuminated, a bell button module, e.g. a single button, a double button, a triple button, ..., an RFID reader module, a remote control receiver module, a keypad module, LCD display module which, for example, makes it possible to scroll through a long list of names e.g. for big apartment buildings, or the like.

### Brief description of the drawings

It has to be noted that same reference signs in the different figures refer to same, similar or analogous elements.
Fig. 1 illustrates a functional module that can be used with a modular outdoor door unit according to embodiments of the invention.
Fig. 2 illustrates a frame that can be used with a modular outdoor door unit according to embodiments of the invention.
Fig. 3 and Fig. 4 illustrate a modular outdoor door unit according to embodiments of the invention.
Fig. 5 illustrates a frame that can be used with a modular outdoor door unit according to embodiments of the invention.
Fig. 6 to Fig. 9 illustrate a modular outdoor unit according to embodiments of the invention.
Fig. 10 illustrates a frame that can be used with a modular outdoor door unit according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides a modular outdoor door unit. The modular outdoor door unit comprises at least one functional module and a frame for fixing the modular outdoor door unit to a mounting box in a wall, the frame being adapted for receiving the at least one functional module. At a lower side, the frame comprises a hole for receiving fixing means for fixing the functional module to the frame. The functional module comprises two hooks at an upper side of the functional module for inserting into corresponding slots at an upper side of the frame, and an opening at a lower side of the functional module for receiving the fixing means for fixing the functional module to the frame.

An advantage of a modular outdoor door unit according to embodiments of the invention is that the means by which the frame is fixed to a mounting box in a wall are not visible from outside the door unit, when a person is looking at it. This gives a more aesthetic look to the outdoor door unit.

Further, because the frame is fixed to the mounting box in the wall and the at least one functional module is fixed to the frame, the functional module can easily be removed or interchanged with another functional module as a user should want that, without the whole outdoor unit having to be removed from the wall. A user can do this himself and does not need an installer to help him or her with that.

The present invention will hereinafter be described by means of different embodiments. It has to be understood that these embodiments are only for the ease of understanding the invention and are not intended to limit the invention in any way.

A modular outdoor door unit 10 according to embodiments of the invention comprises at least one functional module 1. The modular outdoor door unit 10 further comprises a frame 2 for fixing the modular outdoor door unit 10 to a mounting box in a wall. The frame 2 is adapted for receiving the at least one functional module 1 and comprises a hole 3 at a lower side for receiving fixing means 8 for fixing the at least one functional module 1 to the frame 2. With a lower side of the frame 2 is meant, when looking at the frame 2 in front view, the side which is seen at the bottom of the frame 2. The frame 2 may be made out of aluminium, steel, brass or any other suitable metal or alloy. The frame 2 may be fixed to the mounting box in the wall by means of e.g. screws.

The at least one functional module 1 may be a camera module, a name plate module, a button module an RFID reader module, a remote control receiver module, a keypad module, LCD display module, or the like.

Because the frame 2 is fixed to the mounting box in the wall and the at least one functional module 1 is fixed to the frame 2, the functional module 1 can easily be removed from the frame 2 and/or can be interchanged with another functional module 1 as a user should want that, without the whole outdoor door unit 10 having to be removed from the wall.

In the further description, different functional modules 1 will be used to explain the invention. It has, however, to be understood that this is not intended to limit the invention in any way. A modular outdoor door unit 10 according to embodiments of the invention may comprise any suitable number of functional modules 1 as required for particular applications. The frame 2 may then be adapted to receive any required number of functional modules 1 as required for a particular application.

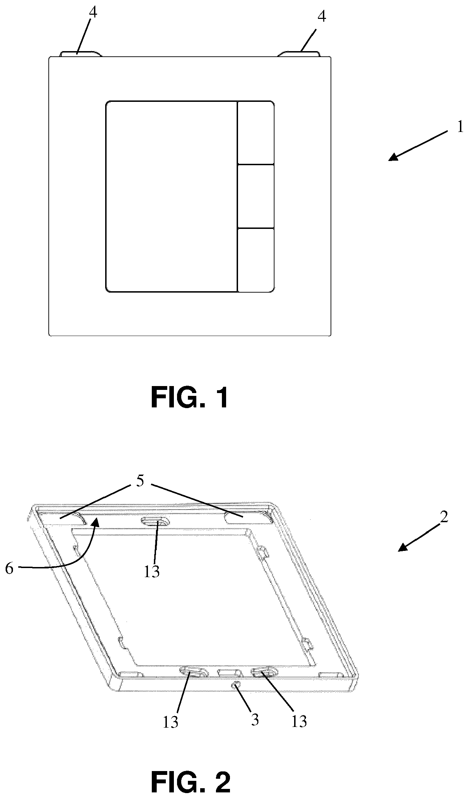

Fig. 1 to Fig. 4 relate to a modular outdoor door unit 10 according to a first embodiment of the present invention. The modular outdoor door unit 10 comprises only one functional module 1. The functional module 1 fixed to the frame 2 is illustrated in Fig. 1. In the example given, the functional module 1 may be a bell button module. As already mentioned above, this only for the ease of explaining the invention and is not intended to limit the invention in any way. The functional module 1 can be any other functional module 1 as required for a particular application. According to the present embodiment, and as illustrated in Fig. 2n the frame 2 is adapted to receive this one functional module 1.

The functional module 1 comprises two hooks 4 at an upper side of the functional module 1 for inserting into corresponding slots 5 at an upper, inner side 6 of the frame 2. With upper side of the functional module 1 is meant, when looking at the functional module in front view, the side at the bottom of the functional module 1.

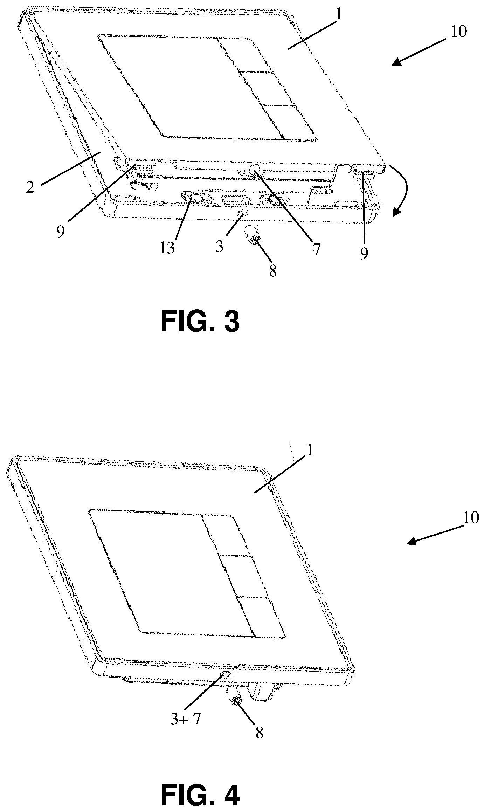

Before providing the functional module to the frame 2, the frame 2 may first be fixed to the mounting box in the wall. Therefore, the frame 2 comprises openings 13 for receiving fixing means, such as screws, for fixing the frame 2 to the mounting box. The functional module 1 may then be provided in the frame 2 by first inserting the hooks 4 in the slots 5 at the upper, inner side 6 of the frame 2. By making a downward, rotating movement (see arrow in Fig. 3) until the functional module 1 is flush with the frame 2 (see Fig. 4), the functional module 1 can be put into place. With the functional module 1 being flush with the frame 2 is meant that, at a front side of the modular outdoor door unit 10 there are substantially no height differences between the frame 2 and the functional module 1, as can be seen in Fig. 4.

The functional module 1 furthermore comprises a hole 7 that, when the functional module 1 is placed flush with the frame 2, is located at a location corresponding with the hole 3 in the frame 2. Fixing means 8 is then provided for fixing the functional module 1 to the frame 2. In that way, the functional module 1 is fixedly provided in the frame 2. Removing the functional module 1 from the frame 2 can then easily be done by removing the fixing means 8 and lifting the functional module 1 out of the frame 2, with an opposite rotating movement as illustrated in Fig. 3 and removing the hooks 4 out of the slots 5. To do this, the frame 2 does not have to be removed from the mounting box in the wall. According to embodiments of the invention, the fixing means 8 may be formed by a screw that is inserted through the hole 3 in the frame 2 into the hole 7 in the lower side of the functional module 1. According to other embodiments, the fixing means 8 may be formed by a screw provided in the hole 7 in the lower side of the functional module 1, which can be screwed out of the hole 7 for fixing the functional module 1 to the frame 2.

Because the functional module 1 is flush with the frame 2, it comprises no or less areas where dust or water can be gathered. Further, the screws, by which the frame 2 is fixed to the mounting box in the wall, are not visible on the outside of the modular outdoor door unit 10. Also no screws are required on the front of the functional module 1 for fixing the functional module 1 to the frame 2, which also is very aesthetic. Still further, the functional module 1 can, as described above, easily be removed out of the frame 2 by just loosening the fixing means 8 at a lower side of the modular outdoor door unit 10 and rotating the functional module 1 upward and then removing the hooks 4 out of the slots 5.

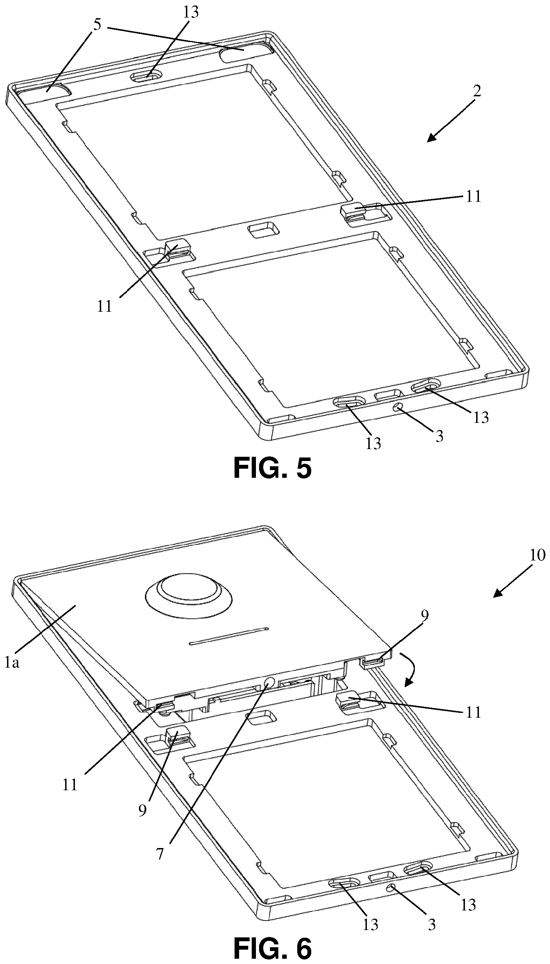

Fig. 5 to Fig. 9 illustrate another embodiment of a modular outdoor door unit 10 according to the invention. According to this embodiment, the modular outdoor door unit 10 comprises two functional modules 1a, 1b. The frame 2 is in this example adapted to receive two functional modules 1 (see Fig. 5).

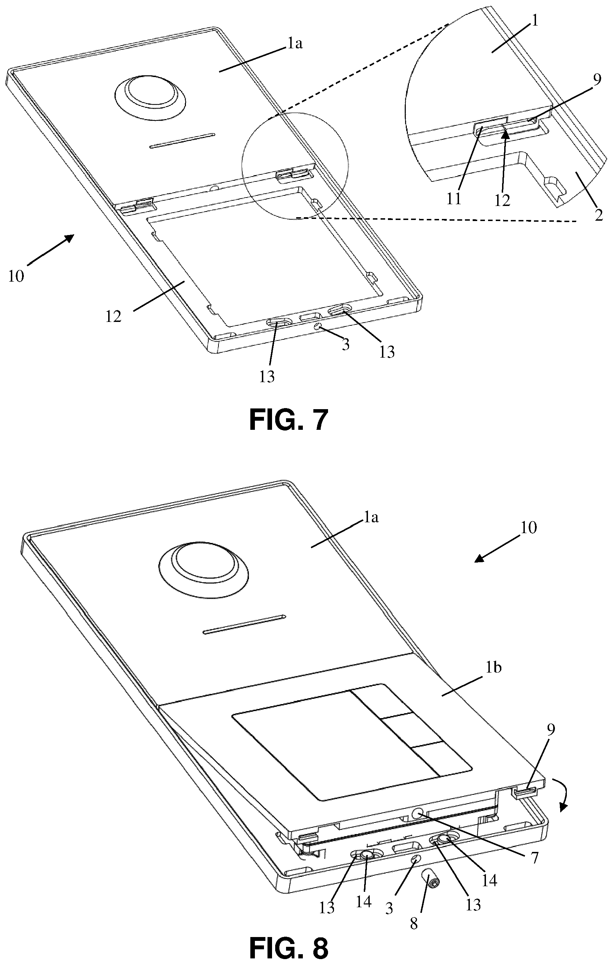

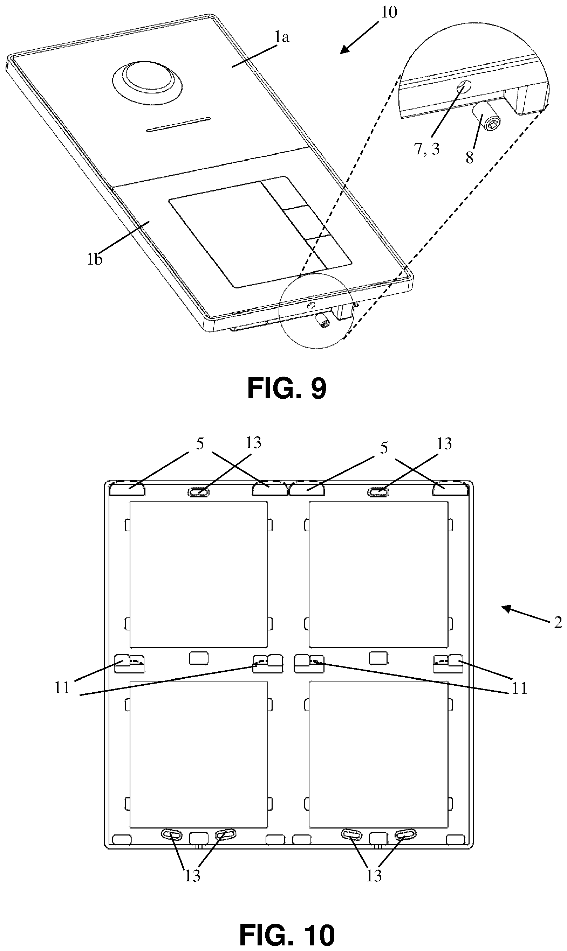

Similar as for the first embodiment, first, the frame 2 is fixed to the mounting box in the wall. Therefore, the frame 2 comprises openings 13 for receiving fixing means, such as screws 14, for fixing the frame 2 to the mounting box. Then, a first functional module 1a is inserted in the frame 2 by inserting the hooks 4 of the first functional module 1a into the slots 5 at the upper, inner side 6 of the frame 2. In the example given, the first functional module 1a may be a camera module. However, again this is not intended to limit the invention in any way, this may be any suitable functional module as required for a particular application. When the hooks 4 are inserted in the slots 5, the functional module 1a is moved downward with a rotating movement (see arrow in Fig. 6) until the functional module 1 is flush with the frame 2 (see Fig. 7). With the functional module 1a being flush with the frame 2 is meant that, at a front side of the modular outdoor door unit 10, there are no height differences between the frame 2 and the functional module 1, as can be seen in Fig. 7 and 8. According to the present embodiment, the functional module 1 may furthermore comprise two first half slots 9 at a lower side of the functional module 1. On the other hand, the frame 2 comprises two second half slots 11. The first half slots 9 of the first functional module 1a and the second half slots 11 of the frame 2 together form, when the first functional module 1a is inserted in and is flush with the frame 2, full slots 12. These full slots 12 then serve for receiving two hooks 4 of the second functional module 1b to be provided in the frame 2. An advantage of this way of mounting is that, by inserting the hooks 4 of the second functional module 1b in the slots 12 in that way, the first functional module 1a is locked in the frame 2. The second functional module 1b is then moved downward with a rotating movement (see arrow in Fig. 8) until also this second functional module 1b is flush with the frame 2 (see Fig. 9). Again, with the functional module 1b being flush with the frame 2 is meant that, at a front side of the modular outdoor door unit 10, there are no height differences between the frame 2 and the functional module 1, as can be seen in Fig. 9. According to the present example, the second functional module 1b may be a bell button module. Again this is not intended to limit the invention in any way. Any combination of functional modules 1a, 1b may be possible, depending on the requirements for a particular application.

When the second functional module 1b is flush with the frame 2, the hole 7 at the lower side of the functional module 1b is located at a corresponding location of the hole 3 in the frame 2. Similar as described with respect to the first embodiment, fixing means 8 may be provided through these holes 3, 7 for fixing the second functional module 1b to the frame 2. According to embodiments of the invention, the fixing mean 8 may be formed by a screw that is inserted through the hole 3 in the frame 2 into the hole 7 in the lower side of the functional module 1b. According to other embodiments, the fixing means 8 may be formed by a screw provided in the hole 7 in the lower side of the functional module 1b, which can be screwed out of the hole 7 for fixing the functional module 1b to the frame 2.

Again, the functional modules 1a, 1b are fixed in the frame 2 without the need for providing screws into the front of the functional modules 1a, 1b. Also, the screws for fixing the frame 2 to the wall are hidden by the functional modules 1a, 1b and are thus not visible on the outside of the modular outdoor door unit 10.

Similar as for the first embodiment, the functional modules 1a, 1b can easily be removed from the frame 2, when required, without having to remove the frame 2 from the mounting box in the wall. Therefore, the fixing means 8 is loosened and the second functional module 1b is moved upward with a rotating movement. Then the hooks 4 from the second functional module 1b are removed out of the slots 12 formed by the first half slots 9 in the first functional module 1a and the second half slots 11 in the frame 2. In that way the second functional module can be removed from the frame 2. By removing the second functional module 1b, the first functional module 1a is no longer fixed in the frame 2 and can also be removed from the frame 2 in a similar way, by moving it upward and removing its hooks 4 from the slots 5 in the frame 2.

The invention has now been described for a single and a twofold modular outdoor door unit 10. It has to be understood that the above can similarly apply to threefold, fourfold, fivefold, sixfold, ..., n-fold modular outdoor door units 10, with n being any suitable number of functional modules 1. Hence, a modular outdoor door unit 10 according to embodiments of the invention can have any number of functional modules 1 as required for a particular application. The functional modules 1 can all be different modules or at least some of the functional modules 1 may be the same. Any combination of functional modules 1 is possible. This is because all functional modules 1 are built in a same way and are therefore applicable in a single, twofold, threefold, fourfold, fivefold, sixfold, ..., n-fold modular outdoor door unit 10. This is because a functional module 1 that can be used with a modular outdoor door unit according to embodiments of the invention comprises, at an upper side, two hooks 4 which fit into slots 5 in the frame 2. These hooks 4 serve for fitting into slots 5 at an upper side of the frame 2, if the functional module is the first functional module 1 to be provided into the frame 2, or the serve for fitting into slots 12 formed by first half slots 9 in a lower side of the functional module already provided in the frame 2 and second half slots 11 in the frame 2, if the functional module 1 is a further functional module or, in general, is not the first functional module to be provided in the frame 2. Further, any functional module1 comprises such first half slots 9 at a lower side to form full slots 12 with second half slots 11 on the frame 2. In that way, any number of functional modules 1 can be provided one after another. At last, any functional module 1 is provided with a hole 7 in a lower side for receiving fixing means 8 for, when the functional module 1 is to be used as a last functional module to be provided in the frame 2, fixing the functional module 1 to the frame 2.

By way of example, Fig. 10 illustrates a frame 2 for being used in a fourfold modular outdoor door unit 10 according to an embodiment of the invention. In the example given, the frame 2 is adapted to receive two vertical rows of two functional modules 1. Functional modules 1 in neighbouring vertical rows are not fixed to each other. This is not necessary, as, because of the way of mounting described above, all functional modules 1 provided in one vertical row are perfectly fixed to the frame as described above.

Further, the modular outdoor door unit 10 according to embodiments of the invention can comprise three functional modules 1, one located above the other. According to still further embodiments of the invention, the modular outdoor door unit 10 may comprise six functional modules 1 in two vertical rows of three functional modules 1. According to still further embodiments, the modular outdoor door unit 10 may comprise eight functional modules 1 in two rows of four functional modules 1, or may comprise nine functional modules 1 in three vertical rows of three functional modules 1 or may comprise any other suitable number of functional modules, depending on the requirements of the modular outdoor door unit 10 for particular applications.

## Claims

1. A modular outdoor door unit (10) comprising:
- at least one functional module (1), and
- a frame (2) for fixing the modular outdoor door unit (10) to a mounting box in a wall, the frame (2) being adapted for receiving the at least one functional module (1) and comprising a hole (3) at a lower side for receiving fixing means (8) for fixing the functional module (1) to the frame (2),
wherein the functional module (1) comprises:
- two hooks (4) at an upper side of the functional module (1) for inserting into corresponding slots (5) at an upper, inner side (6) of the frame (2), and
- a hole (7) at a lower side of the functional module (1) for receiving the fixing means (8) for fixing the functional module (1) to the frame (2).

2. A modular outdoor door unit (10) according to claim 1, wherein the modular outdoor door unit (10) furthermore comprises at least one further functional module (1) and wherein each of the functional modules (1) further comprises two first half slots (9) at a lower side of the functional module (1) to form a full slot (12) with two corresponding second half slots (11) on the frame (2) when being inserted in the frame (2) and being flush with the frame (2), the full slots (12) serving for receiving two hooks (4) of a further functional module (1) to be provided in the frame (2).

3. A modular outdoor door unit (10) according to claim 1 or 2, wherein the modular outdoor door unit (10) comprises two functional modules (1), one located above the other.

4. A modular outdoor door unit (10) according to claim 1 or 2, wherein the modular outdoor door unit (10) comprises three functional modules (1), one located above the other.

5. A modular outdoor door unit (10) according to claim 1 or 2, wherein the modular outdoor door unit (10) comprises four functional modules (1) in two vertical rows of two functional modules (1).

6. A modular outdoor door unit (10) according to claim 1 or 2, wherein the modular outdoor door unit (10) comprises six functional modules (1) in two vertical rows of three functional modules (1).

7. A modular outdoor door unit (10) according to any of the previous claims, wherein the fixing means (8) is formed by a screw that is inserted through a hole (3) in the frame (2) into the hole (7) in the lower side of the functional module (1).

8. A modular outdoor door unit (10) according to any of claims 1 to 6, wherein the fixing means (8) is formed by a screw provided in the hole (7) in the lower side of the functional module (1), which can be screwed out of the hole (7) for fixing the functional module (1) to the frame (2).

9. A modular outdoor door unit (10) according to any of the previous claims, wherein the frame (2) is fixed to the mounting box by means of screws.

10. A modular outdoor door unit (10) according to any of the previous claims, wherein the frame (2) is made out of aluminium, steel, brass or any other suitable metal or alloy.

11. A modular outdoor door unit (10) according to any of the previous claims, wherein the at least one functional module (1) is a camera module, a name plate module, a bell button module an RFID reader module, a remote control receiver module, a keypad module, LCD display module, or the like.

## Patentansprüche

1. Modulare Außentüreinheit (10), umfassend:
- wenigstens ein Funktionsmodul (1) und
- einen Rahmen (2) zum Befestigen der modularen Außentüreinheit (10) an einer Montagebox in einer Wand, wobei der Rahmen (2) zum Aufnehmen des wenigstens einen Funktionsmoduls (1) angepasst ist und ein Loch (3) an einer unteren Seite zum Aufnehmen eines Befestigungsmittels (8) zum Befestigen des Funktionsmoduls (1) an dem Rahmen (2) umfasst,
wobei das Funktionsmodul (1) umfasst:
- zwei Haken (4) an einer oberen Seite des Funktionsmoduls (1) zum Einsetzen in entsprechende Schlitze (5) an einer oberen inneren Seite (6) des Rahmens (2), und
- ein Loch (7) an einer unteren Seite des Funktionsmoduls (1) zum Aufnehmen des Befestigungsmittels (8) zum Befestigen des Funktionsmoduls (1) an dem Rahmen (2).

2. Modulare Außentüreinheit (10) nach Anspruch 1, wobei die modulare Außentüreinheit (10) ferner wenigstens ein weiteres Funktionsmodul (1) umfasst und wobei jedes der Funktionsmodule (1) ferner zwei erste Halbschlitze (9) an einer unteren Seite des Funktionsmoduls (1) umfasst, um einen vollen Schlitz (12) mit zwei entsprechenden zweiten Halbschlitzen (11) an dem Rahmen (2) auszubilden, wenn sie in den Rahmen (2) eingesetzt werden und mit dem Rahmen (2) bündig sind, wobei die vollen Schlitze (12) zum Aufnehmen von zwei Haken (4) eines weiteren Funktionsmoduls (1) dienen, das in dem Rahmen (2) bereitgestellt werden soll.

3. Modulare Außentüreinheit (10) nach Anspruch 1 oder 2, wobei die modulare Außentüreinheit (10) zwei Funktionsmodule (1) umfasst, von denen eines über dem anderen gelegen ist.

4. Modulare Außentüreinheit (10) nach Anspruch 1 oder 2, wobei die modulare Außentüreinheit (10) drei Funktionsmodule (1) umfasst, von denen eines über dem anderen gelegen ist.

5. Modulare Außentüreinheit (10) nach Anspruch 1 oder 2, wobei die modulare Außentüreinheit (10) vier Funktionsmodule (1) in zwei vertikalen Reihen von zwei Funktionsmodulen (1) umfasst.

6. Modulare Außentüreinheit (10) nach Anspruch 1 oder 2, wobei die modulare Außentüreinheit (10) sechs Funktionsmodule (1) in zwei vertikalen Reihen von drei Funktionsmodulen (1) umfasst.

7. Modulare Außentüreinheit (10) nach einem der vorhergehenden Ansprüche, wobei das Befestigungsmittel (8) durch eine Schraube ausgebildet wird, die durch ein Loch (3) in dem Rahmen (2) in das Loch (7) in der unteren Seite des Funktionsmoduls (1) eingesetzt wird.

8. Modulare Außentüreinheit (10) nach einem der Ansprüche 1 bis 6, wobei das Befestigungsmittel (8) durch eine Schraube ausgebildet wird, die in dem Loch (7) in der unteren Seite des Funktionsmoduls (1) bereitgestellt wird, die zum Befestigen des Funktionsmoduls (1) an dem Rahmen (2) aus dem Loch (7) herausgeschraubt werden kann.

9. Modulare Außentüreinheit (10) nach einem der vorhergehenden Ansprüche, wobei der Rahmen (2) mittels Schrauben an der Montagebox befestigt ist.

10. Modulare Außentüreinheit (10) nach einem der vorhergehenden Ansprüche, wobei der Rahmen (2) aus Aluminium, Stahl, Messing oder einem beliebigen anderen geeigneten Metall oder einer beliebigen anderen Legierung hergestellt ist.

11. Modulare Außentüreinheit (10) nach einem der vorhergehenden Ansprüche, wobei das wenigstens eine Funktionsmodul (1) ein Kameramodul, ein Namensschildmodul, ein Klingelknopfmodul, ein RFID-Lesemodul, ein Fernsteuerungsempfängermodul, ein Tastaturmodul, ein LCD-Anzeigemodul oder dergleichen ist.

## Revendications

1. Unité de porte extérieure modulaire (10) comprenant :
- au moins un module fonctionnel (1), et
- un cadre (2) pour fixer l'unité de porte extérieure modulaire (10) à un boîtier de montage dans un mur, le cadre (2) étant adapté pour recevoir l'au moins un module fonctionnel (1) et comprenant un trou (3) au niveau d'une face inférieure pour recevoir un moyen de fixation (8) pour fixer le module fonctionnel (1) au cadre (2),
le module fonctionnel (1) comprenant :
- deux crochets (4) sur un côté supérieur du module fonctionnel (1) pour insérer dans des fentes correspondantes (5) sur un côté supérieur interne (6) du cadre (2), et
- un trou (7) sur un côté inférieur du module fonctionnel (1) pour recevoir le moyen de fixation (8) pour fixer le module fonctionnel (1) au cadre (2).

2. Unité de porte extérieure modulaire (10) selon la revendication 1, l'unité de porte extérieure modulaire (10) comprenant en outre au moins un module fonctionnel (1) supplémentaire et chacun des modules fonctionnels (1) comprenant en outre deux premières demi-fentes (9) au niveau d'un côté inférieur du module fonctionnel (1) pour former une fente complète (12) comprenant deux secondes demi-fentes (11) correspondantes sur le cadre (2) lors de son insertion dans le cadre (2) et de son alignement avec le cadre (2), les fentes complètes (12) servant à recevoir deux crochets (4) d'un module fonctionnel (1) supplémentaire à prévoir dans le cadre (2).

3. Unité de porte extérieure modulaire (10) selon la revendication 1 ou 2, l'unité de porte extérieure modulaire (10) comprenant deux modules fonctionnels (1), l'un situé au-dessus de l'autre.

4. Unité de porte extérieure modulaire (10) selon la revendication 1 ou 2, l'unité de porte extérieure modulaire (10) comprenant trois modules fonctionnels (1), l'un situé au-dessus de l'autre.

5. Unité de porte extérieure modulaire (10) selon la revendication 1 ou 2, l'unité de porte extérieure modulaire (10) comprenant quatre modules fonctionnels (1) dans deux rangées verticales de deux modules fonctionnels (1).

6. Unité de porte extérieure modulaire (10) selon la revendication 1 ou 2, l'unité de porte extérieure modulaire (10) comprenant six modules fonctionnels (1) dans deux rangées verticales de trois modules fonctionnels (1).

7. Unité de porte extérieure modulaire (10) selon l'une quelconque des revendications précédentes, le moyen de fixation (8) étant formé par une vis qui est insérée à travers un trou (3) dans le cadre (2) dans le trou (7) dans le côté inférieur du module fonctionnel (1).

8. Unité de porte extérieure modulaire (10) selon l'une quelconque des revendications 1 à 6, le moyen de fixation (8) étant formé par une vis prévue dans le trou (7) dans le côté inférieur du module fonctionnel (1), qui peut être vissée hors du trou (7) pour fixer le module fonctionnel (1) au cadre (2).

9. Unité de porte extérieure modulaire (10) selon l'une quelconque des revendications précédentes, le cadre (2) étant fixé au boîtier de montage au moyen de vis.

10. Unité de porte extérieure modulaire (10) selon l'une quelconque des revendications précédentes, le cadre (2) étant constitué d'aluminium, d'acier, de laiton ou de tout autre métal ou alliage approprié.

11. Unité de porte extérieure modulaire (10) selon l'une quelconque des revendications précédentes, l'au moins un module fonctionnel (1) étant un module de caméra, un module de plaque d'identification, un module de bouton de sonnette, un module de lecteur RFID, un module récepteur de commande à distance, un module de clavier, un module d'affichage LCD ou similaire.
